(19)

Europäisches
Patentamt
European
Patent Office
Office européen
des brevets

(11) **EP 3 772 366 A1**

(12) **EUROPEAN PATENT APPLICATION**

(43) Date of publication:
    **10.02.2021 Bulletin 2021/06**

(51) Int Cl.:
    ***B01D 39/16*** (2006.01)     ***B01D 39/18*** (2006.01)

(21) Application number: **20158222.8**

(22) Date of filing: **19.02.2020**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(30) Priority: **06.08.2019 KR 20190095636
               02.12.2019 KR 20190158025**

(71) Applicant: *Endeavour Lab Co., Ltd.*
    **Wanju-Gun, Jeollabuk-do 55315 (KR)**

(72) Inventor: **RYU, Eunsang
    34543 Daejeon (KR)**

(74) Representative: **M. Zardi & Co S.A.
    Via G. B. Pioda, 6
    6900 Lugano (CH)**

(54) **HYBRID FILTER FOR FILTERING OUT FINE AND ULTRAFINE DUST**

(57)     The present invention is directed to a hybrid filter for filtering out fine and ultrafine dust. The hybrid filter, in which cellulose nanofibers are adhered to a porous support by an aqueous binder, according to the present invention is a hybrid filter that is not a conventional filter having a multilayer structure but a filter having a single layer. The hybrid filter according to the present invention has low airflow resistance and excellent fine pollutant filtration rate.

FIG. 3

EP 3 772 366 A1

**Description**

CROSS-REFERENCE TO RELATED APPLICATION

This application claims the benefit of Korean Patent Application No. 10-2019-0158025 filed on December 2, 2019, which is hereby incorporated by reference herein in its entirety.

BACKGROUND

1. Technical Field

The present invention relates to a hybrid filter for filtering out fine and ultrafine dust.

2. Description of the Related Art

Fine dust is a matter of great concern because it may cause not only respiratory diseases but also various threats to human health. Accordingly, nationwide efforts have been made to reduce the generation of fine dust, and the wearing of masks, which are individual-level protection means, has increased.

According to the data of the Korean Ministry of Environment, it is known that $So_x$ and $NO_x$ account for more than half of the composition of fine dusts. Accordingly, fine dust masks must prevent the inhalation of these polar materials in the body. Most masks today rely on methods of filtering out fine dust, such as sieves, and frequently and chiefly use nonwoven fabrics. Furthermore, the most widely used nonwovens are manufactured using polypropylene. However, although the nonwoven fabrics manufactured using polypropylene can physically filter out fine dust like filters such as sieves, they have limitations in that they cannot prevent the inhalation of $SO_x$ and $NO_x$ having high polarity in an ultrafine state, which are not filtered out, in the body.

Accordingly, there is an increasing need for the materials of masks that can easily adsorb materials, such as $SO_x$ and $NO_x$.

Therefore, in the present invention, in order to develop a filter capable of adsorbing not only general fine dust but also ultrafine dust including $SO_x$ and $NO_x$, a technology for manufacturing a hybrid filter, having a very large specific surface area and high hydrophilicity and thus providing a high filtration rate for ultrafine dust, including $SO_x$ and $NO_x$, and excellent breathability, by hybridizing a porous support and cellulose nanofibers is established, thus resulting in the completion of the present invention.

More specifically, the present invention is based on the principle of combining the large specific surface area and high hydrophilicity of the cellulose nanofibers and the porosity and desirable physical properties of the foam support.

[Related art document]

[Patent document]

Korean Patent No. 10-1795795

SUMMARY

An object of the present invention is to provide a hybrid filter for filtering out fine and ultrafine dust.

Another object of the present invention is to provide a method of manufacturing the hybrid filter for filtering out fine and ultrafine dust.

In order to accomplish at least one of the above objects, the present invention provides a hybrid filter, wherein cellulose nanofibers are adhered to a porous support by an aqueous binder.

Furthermore, the present invention provides a method of manufacturing a hybrid filter, the method including: step 1 of preparing an impregnation solution by mixing cellulose nanofibers and an aqueous binder in water; and step 2 of impregnating a porous support with the impregnation solution prepared at step 1.

BRIEF DESCRIPTION OF THE DRAWINGS

The above and other objects, features, and advantages of the present invention will be more clearly understood from the following detailed description taken in conjunction with the accompanying drawings, in which:

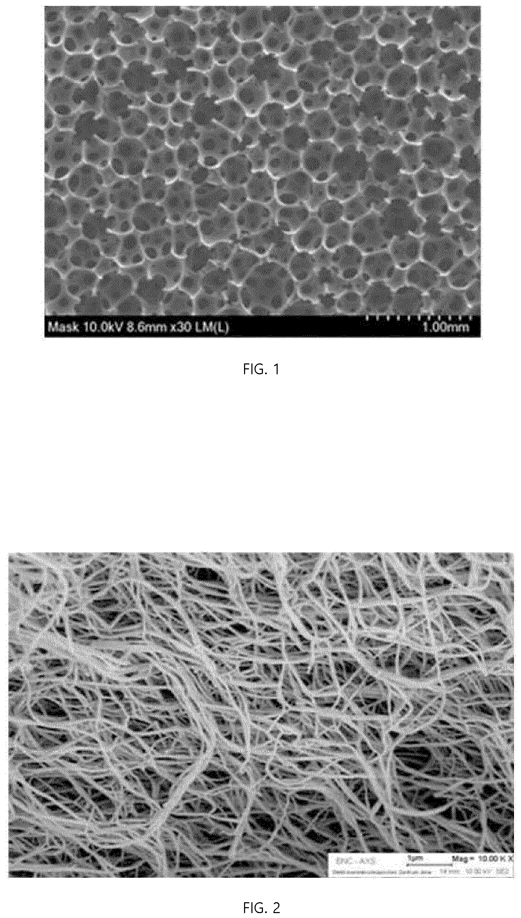

FIG. 1 is an image of reticulated flexible polyurethane foam observed with a scanning electron microscope;

FIG. 2 is an image of cellulose nanofibers observed with a scanning electron microscope;

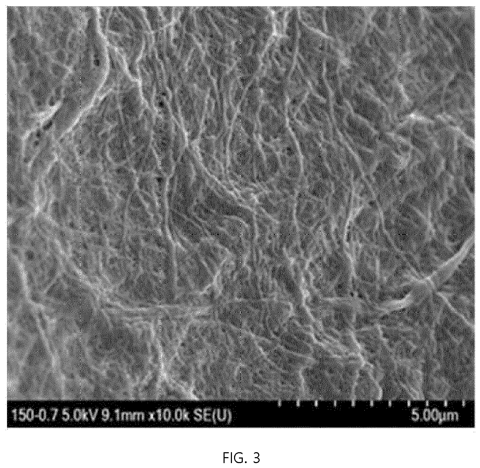

FIG. 3 is an image of a hybrid filter, in which cellulose nanofibers are adhered to reticulated polyurethane foam by an aqueous binder according to an embodiment of the present invention, observed with a scanning electron microscope;

FIGS. 4 to 6 shows images of situations, in which cellulose nanofibers are adhered to the microstructures of the pores of hybrid filters according to embodiments of the present invention, observed with a scanning electron microscope (scale bar: 500 $\mu$m); and

FIG. 7 shows images of situations, in which the cellulose nanofibers adhered to the microstructures of the pores of the hybrid filters according to the embodiments of the present invention desirably maintain micro-nanofiber structures even after being adhered, observed with a scanning electron microscope (scale bar: 2 $\mu$m).

## DETAILED DESCRIPTION

Embodiments of the present invention will be described in detail below with reference to the accompanying drawings.

Hybrid filter

The present invention provides a hybrid filter that is characterized in that cellulose nanofibers are adhered to a porous support by an aqueous binder.

The porous support functions as a support having breathability. Polyurethane foam or the like may be used as the porous support. Preferably, reticulated polyurethane foam may be used as the porous support. Furthermore, flexible, semirigid, or rigid foam may be used to fit the purpose of use of the hybrid filter. When the hybrid filter is used for a face mask, it is particularly preferable to use reticulated flexible polyurethane foam.

The cellulose nanofibers include a plurality of hydroxyl groups in abundance, and function to adsorb polar micropollutants, such as $SO_x$, $NO_x$, etc. $So_x$ and $NO_x$ are polar micropollutants that account for more than half of the composition of fine and ultrafine dust. The diameter of the cellulose nanofibers may be 1 to 50 nm, preferably 5 to 25 nm, and the length thereof is not limited. Furthermore, the cellulose nanofibers may be biotic cellulose nanofibers or abiotic cellulose nanofibers. The abiotic cellulose nanofibers include wood-based abiotic cellulose nanofibers, microorganism-based abiotic cellulose nanofibers, etc.

The aqueous binder functions to adhere the porous support and the cellulose nanofibers to each other. Any waterborne polymer binder may be used as the aqueous binder. Preferably, polyurethane dispersion (PUD) may be used as the aqueous binder.

The cellulose nanofibers and the aqueous binder are mixed and used at a weight ratio of 1:1 to 1:0.25. When the mixture weight ratio of the cellulose nanofibers and the aqueous binder exceeds 1:1 (when the proportion of the aqueous binder exceeds 1), a problem may arise in that the specific surface area of the cellulose nanofibers decreases and the porosity of the porous support decreases. In contrast, when the mixture weight ratio is smaller than 1:0.25 (when the proportion of the aqueous binder is smaller than 0.25), a problem may arise in that the cellulose nanofibers are not sufficiently adhered to the porous support but are separated therefrom.

Preparation may be made such that the impregnated amount of the mixture of the cellulose nanofibers and the aqueous binder into the porous support is 1 to 30 wt%. When the impregnated amount is insufficient, airflow resistance is low, but a problem may arise in that the fine pollutant filtration rate for $NO_x$, $SO_x$, etc. is significantly reduced. In contrast, when the impregnated amount is excessively large, the fine pollutant filtration rate for $NO_x$, $SO_x$, etc. is excellent, but a problem may arise in that a product is excessively hard and cannot be used as the material of a face mask.

In this respect, an impregnated amount of 7 to 21 wt% may be preferable.

The hybrid filter may be used for filtering various fine pollutants in the air, and may be preferably applied to a face mask for filtering fine and ultrafine dust.

Although flexible polyurethane foam has desirable breathability after reticulation, it is necessary to increase a fine dust adsorption area and in particular to increase the polarity. The reason for this is that the cellulose nanofibers have desirable hydrophilicity because they have a repeated structure having a plurality of hydroxyl groups of a cellulose structure and have a desirably large surface area because they have a diameter of about a few tens of nonometers. In order to help to hybridize the cellulose nanofibers with the polyurethane foam having an open cell structure, a binder is required to help to combine these two materials with each other. The reason for this is that when there is no binder, these two materials may be separated from each other after drying. A colloidal material such as PUD is advantageous as the binder for the polyurethane foam and the cellulose nanofibers. Water-dispersed cellulose nanofibers and PUD are easy to mix, and have desirable affinity. Accordingly, PUD may adhere the two materials as the binder for the polyurethane foam and the cellulose nanofibers during a drying process.

Method of manufacturing hybrid filter

The present invention provides a method of manufacturing a hybrid filter, the method including:

the step of preparing an impregnation solution by mixing cellulose nanofibers and an aqueous binder in water (step 1); and
the step of impregnating a porous support with the impregnation solution prepared at step 1 (step 2).

The cellulose nanofibers include a plurality of hydroxyl groups in abundance, and function to adsorb polar micropollutants, such as $SO_x$, $NO_x$, etc. $So_x$ and $NO_x$ are polar micropollutants that account for more than half of the composition of fine and ultrafine dust.

The cellulose nanofibers have the characteristic of being aggregated with each other with a strong binding force. When the cellulose nanofibers are aggregated, a problem arises in that the specific surface area thereof is reduced. Accordingly, the present invention employs the process in which the cellulose nanofibers together with the waterborne binder are dispersed in water and then the porous support is impregnated with the solution, and thus the cellulose nanofibers are uniformly adhered to the porous support and are prevented from being aggregated with each other.

In the manufacturing method according to the present invention, step 1 is the step of preparing an impregnation solution by mixing cellulose nanofibers and an aqueous binder in water. Descriptions of the cellulose nanofibers and the aqueous binder are the same as described above.

In this case, for the manufacture of a hybrid filter, the appropriate viscosity of the cellulose nanofibers and the appropriate content of the aqueous binder act as important factors.

In the manufacturing method according to the present invention, step 2 is the step of impregnating a porous support with the impregnation solution prepared at step 1. A description of the porous support is the same as described above.

In this case, in order to satisfy both the breathability of a hybrid filter and the filtration rate for fine pollutants, the impregnated amount of the impregnation solution into the porous support acts as an important factor.

The present invention will be described in greater detail below with reference to the following embodiments.

However, the following embodiments are only examples of the present invention, and the present invention is not limited to the following embodiments.

<Embodiments 1-1 to 3-5> Manufacture of hybrid filter

Step 1: Preparing impregnation solution

For the manufacture of a hybrid filter, the appropriate viscosity of cellulose nanofibers and the appropriate content of an aqueous binder act as important factors. The average diameter of the cellulose nanofibers was 20 nm, and PUD was used as the aqueous binder. The cellulose nanofibers and the aqueous binder were mixed in water to thus prepare impregnation solutions having the various compositions shown in table 1 below.

Step 2: Impregnating porous support

Reticulated flexible polyurethane foam was used as a porous support. Reticulated flexible polyurethane foam was sufficiently impregnated with the impregnation solutions having various compositions prepared at step 1 for about 10 minutes, taken out, and dried at room temperature for one day to thus manufacture hybrid filters.

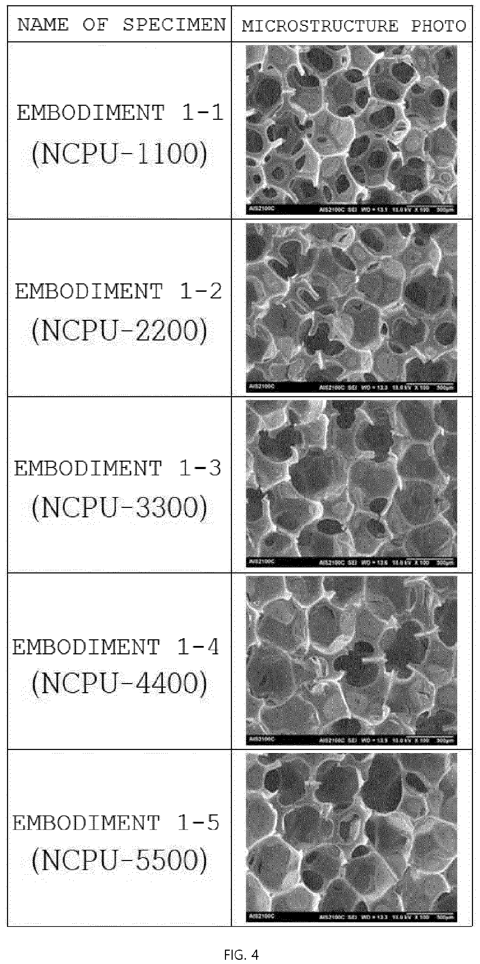

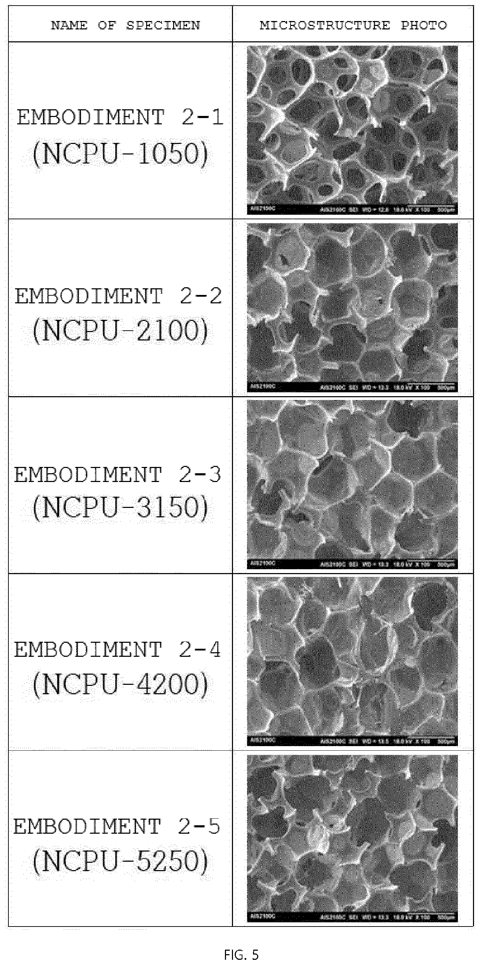

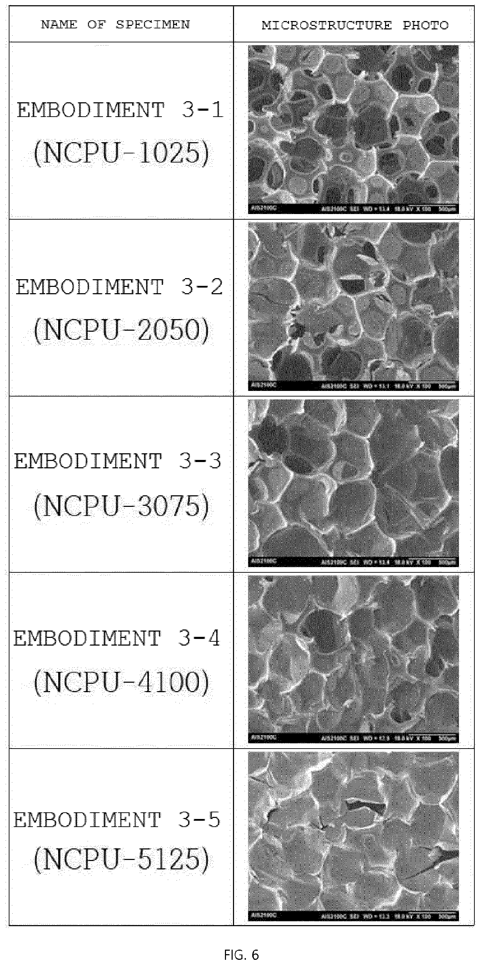

It was observed by a scanning electron microscope that the cellulose nanofibers were adhered to the microstructures of the pores of the hybrid filters prepared in the compositions of embodiments 1-1 to 3-5, which is shown in FIGS. 4 to 6 (scale bar: 500 μm).

<Experimental example 1> Evaluation of the impregnation amounts of mixtures of cellulose nanofibers and an aqueous binder into hybrid filters

The impregnation amounts were calculated by the following equation:

Impregnation amount = {(weight of foam after impregnation
– weight of foam before impregnation)/weight of foam before
impregnation} × 100

Table 1

| | Composition of impregnation solution (wt%) | | Impregnated amount (wt%) |
|---|---|---|---|
| | cellulose nanofibers | PUD | |
| Embodiment 1-1 (NCPU-1100) | 0.100 | 0.100 | 3.6 |
| Embodiment 1-2 (NCPU-2200) | 0.200 | 0.200 | 10.1 |
| Embodiment 1-3 (NCPU-3300) | 0.300 | 0.300 | 15.8 |
| Embodiment 1-4 (NCPU-4400) | 0.400 | 0.400 | 21.8 |
| Embodiment 1-5 (NCPU-5500) | 0.500 | 0.500 | 29.1 |
| Embodiment 2-1 (NCPU-1050) | 0.100 | 0.050 | 2.5 |
| Embodiment 2-2 (NCPU-2100) | 0.200 | 0.100 | 7.5 |
| Embodiment 2-3 (NCPU-3150) | 0.300 | 0.150 | 13.2 |
| Embodiment 2-4 (NCPU-4200) | 0.400 | 0.200 | 18.5 |
| Embodiment 2-5 (NCPU-5250) | 0.500 | 0.250 | 20.3 |
| Embodiment 3-1 (NCPU-1025) | 0.100 | 0.025 | 3.4 |
| Embodiment 3-2 (NCPU-2050) | 0.200 | 0.050 | 8.7 |
| Embodiment 3-3 (NCPU-3075) | 0.300 | 0.075 | 13.9 |
| Embodiment 3-4 (NCPU-4100) | 0.400 | 0.100 | 17.9 |
| Embodiment 3-5 (NCPU-5125) | 0.500 | 0.125 | 22.4 |

As shown in table 1, when the concentration of the cellulose nanofibers was increased, a tendency for the impregnated amount to increase regardless of the content of the PUD binder was shown.

Furthermore, even when the concentration of PUD used as the binder was lowered, a tendency for the impregnated amount to rarely decrease was shown. Furthermore, the degree of formation of a cellulose nanofiber film in the open cells of the flexible polyurethane foam increased with an increase in the content of the cellulose nanofibers.

In terms of breathability (airflow resistance) and the filtration rate for fine pollutants, embodiments 1-3, 1-4, 2-2, and 2-3 were preferable.

<Experimental example 2> Observation of shape after adhesion of cellulose nanofibers to open cells of flexible polyurethane foam.

It could be seen from FIGS. 4 to 6 that cellulose nanofiber films were formed on the open cells of the flexible polyurethane foam.

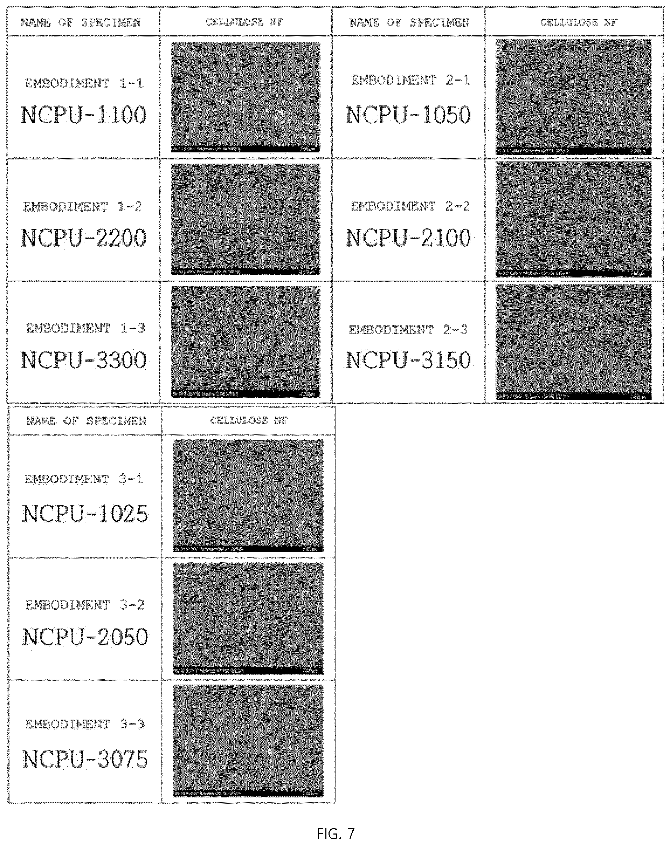

In this regard, in order to find out whether or not nanofiber shapes having a large specific surface area are maintained in the cellulose nanofiber films, the results of the enlarged observation of FIGS. 4 to 6 (scale bar: 500 μm) are shown in FIG. 7 (scale bar: 2 μm).

As shown in FIG. 7, it can be seen that even after the cellulose nanofibers were adhered to the microstructures of the pores of the hybrid filters according to the embodiments of the present invention, the micro-nanofiber structures were well maintained.

The hybrid filter, in which cellulose nanofibers are adhered to a porous support by an aqueous binder, according to the present invention is a hybrid filter that is not a conventional filter having a multilayer structure but a filter having a single layer. The hybrid filter according to the present invention provides the advantages of having low airflow resistance and excellent fine pollutant filtration rate.

**Claims**

1.  A hybrid filter, wherein cellulose nanofibers are adhered to a porous support by an aqueous binder.

2.  The hybrid filter of claim 1, wherein the porous support is polyurethane foam.

3.  The hybrid filter of claim 2, wherein the polyurethane foam is reticulated polyurethane foam.

4.  The hybrid filter of claim 1, wherein the cellulose nanofibers have a diameter of 1 to 50 nm.

5.  The hybrid filter of claim 1, wherein the aqueous binder is polyurethane dispersion (PUD).

6.  The hybrid filter of claim 1, wherein the cellulose nanofibers and the aqueous binder are included at a weight ratio of 1:1 to 1:0.25.

7.  The hybrid filter of claim 1, wherein an impregnated amount of a mixture of the cellulose nanofibers and the aqueous binder into the porous support is 1 to 30 wt%.

8.  The hybrid filter of claim 1, wherein the hybrid filter is used for a face mask for filtering out fine and ultrafine dust.

9.  A method of manufacturing a hybrid filter, the method comprising:

    step 1 of preparing an impregnation solution by mixing cellulose nanofibers and an aqueous binder in water; and
    step 2 of impregnating a porous support with the impregnation solution prepared at step 1.

10. The method of claim 9, wherein the cellulose nanofibers of step 1 have a diameter of 1 to 50 nm.

11. The method of claim 9, wherein the aqueous binder of step 1 is polyurethane dispersion (PUD).

12. The method of claim 9, wherein the porous support of step 2 is polyurethane foam.

13. The method of claim 12, wherein the polyurethane foam is reticulated polyurethane foam.

14. The method of claim 9, wherein the cellulose nanofibers and aqueous binder of step 1 are mixed at a weight ratio of 1:1 to 1:0.25.

15. The method of claim 9, wherein an impregnated amount of a mixture of the cellulose nanofibers and aqueous binder of step 1 into the porous support of step 2 is 1 to 30 wt%.

FIG. 1

FIG. 2

FIG. 3

| NAME OF SPECIMEN | MICROSTRUCTURE PHOTO |
|---|---|
| EMBODIMENT 1-1 (NCPU-1100) | |
| EMBODIMENT 1-2 (NCPU-2200) | |
| EMBODIMENT 1-3 (NCPU-3300) | |
| EMBODIMENT 1-4 (NCPU-4400) | |
| EMBODIMENT 1-5 (NCPU-5500) | |

FIG. 4

| NAME OF SPECIMEN | MICROSTRUCTURE PHOTO |
|---|---|
| EMBODIMENT 2-1 (NCPU-1050) | |
| EMBODIMENT 2-2 (NCPU-2100) | |
| EMBODIMENT 2-3 (NCPU-3150) | |
| EMBODIMENT 2-4 (NCPU-4200) | |
| EMBODIMENT 2-5 (NCPU-5250) | |

FIG. 5

| NAME OF SPECIMEN | MICROSTRUCTURE PHOTO |
|---|---|
| EMBODIMENT 3-1 (NCPU-1025) | |
| EMBODIMENT 3-2 (NCPU-2050) | |
| EMBODIMENT 3-3 (NCPU-3075) | |
| EMBODIMENT 3-4 (NCPU-4100) | |
| EMBODIMENT 3-5 (NCPU-5125) | |

FIG. 6

| NAME OF SPECIMEN | CELLULOSE NF | NAME OF SPECIMEN | CELLULOSE NF |
|---|---|---|---|
| EMBODIMENT 1-1<br><br>NCPU-1100 | | EMBODIMENT 2-1<br><br>NCPU-1050 | |
| EMBODIMENT 1-2<br><br>NCPU-2200 | | EMBODIMENT 2-2<br><br>NCPU-2100 | |
| EMBODIMENT 1-3<br><br>NCPU-3300 | | EMBODIMENT 2-3<br><br>NCPU-3150 | |

| NAME OF SPECIMEN | CELLULOSE NF |
|---|---|
| EMBODIMENT 3-1<br><br>NCPU-1025 | |
| EMBODIMENT 3-2<br><br>NCPU-2050 | |
| EMBODIMENT 3-3<br><br>NCPU-3075 | |

FIG. 7

12

Europäisches
Patentamt

European
Patent Office

Office européen
des brevets

## EUROPEAN SEARCH REPORT

**Application Number**

EP 20 15 8222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 5 993411 B2 (HOKUETSU KISHU PAPER CO LTD; UNIV TOKYO) 14 September 2016 (2016-09-14) * abstract * ----- | 1-15 | INV. B01D39/16 B01D39/18 |
| A | WO 2017/022052 A1 (HOKUETSU KISHU PAPER CO LTD [JP]; UNIV TOKYO [JP]) 9 February 2017 (2017-02-09) * claims * ----- | 1-15 | |
| A | JP 2017 177091 A (HOKUETSU KISHU PAPER CO LTD; UNIV TOKYO) 5 October 2017 (2017-10-05) * abstract * ----- | 1-15 | |

| | | | TECHNICAL FIELDS SEARCHED (IPC) |
|---|---|---|---|
| | | | B01D |

The present search report has been drawn up for all claims

| Place of search | Date of completion of the search | Examiner |
|---|---|---|
| The Hague | 14 September 2020 | Plaka, Theophano |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ....................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 15 8222

This annex lists the patent family members relating to the patent documents cited in  the above-mentioned European search report.
The members are as contained in the European Patent Office EDP file on
The European Patent Office is in no way liable for these particulars which are merely given for the purpose of information.

14-09-2020

| Patent document cited in search report | | Publication date | Patent family member(s) | | Publication date |
|---|---|---|---|---|---|
| JP 5993411 | B2 | 14-09-2016 | JP | 5993411 B2 | 14-09-2016 |
| | | | JP | 2015003386 A | 08-01-2015 |
| WO 2017022052 | A1 | 09-02-2017 | CA | 2992253 A1 | 09-02-2017 |
| | | | CN | 107847834 A | 27-03-2018 |
| | | | EP | 3332856 A1 | 13-06-2018 |
| | | | JP | 6592518 B2 | 16-10-2019 |
| | | | JP | WO2017022052 A1 | 24-05-2018 |
| | | | KR | 20180017192 A | 20-02-2018 |
| | | | US | 2018200655 A1 | 19-07-2018 |
| | | | WO | 2017022052 A1 | 09-02-2017 |
| JP 2017177091 | A | 05-10-2017 | JP | 6721919 B2 | 15-07-2020 |
| | | | JP | 2017177091 A | 05-10-2017 |

EPO FORM P0459

For more details about this annex : see Official Journal of the European Patent Office, No. 12/82

**REFERENCES CITED IN THE DESCRIPTION**

**Patent documents cited in the description**

- KR 1020190158025

- KR 101795795